# EUROPEAN PATENT APPLICATION

(11) **EP 4 545 484 A1**
(43) Date of publication of application: **30.04.2025**
(21) Application number: 24184596.5
(22) Date of filing: 26.06.2024
(51) Int. Cl.: C01G 53/00

(54) **SODIUM ION BATTERY CATHODE MATERIAL AND PREPARATION METHOD THEREFOR AND APPLICATION THEREOF**

(30) Priority: 24.10.2023 CN 202311388602
(71) Applicant: HUBEI RT ADVANCED MATERIALS GROUP COMPANY LIMITED, Daye City Huangshi, Hubei 435100 (CN)
(72) Inventor: Sun, Jie, Huangshi, 435100 (CN); Wu, Dabei, Huangshi, 435100 (CN); Wang, Zhengjie, Huangshi, 435100 (CN); Dong, Yaogang, Huangshi, 435100 (CN); Ma, Mengyu, Huangshi, 435100 (CN); Xu, Dong, Huangshi, 435100 (CN); Mei, Jing, Huangshi, 435100 (CN); He, Jianhao, Huangshi, 435100 (CN); He, Zhonglin, Huangshi, 435100 (CN)
(74) Representative: Cleanthous, Marinos

(57) **Abstract**

Provided is a sodium ion battery cathode material and a preparation method therefor and application thereof. A chemical formula of the sodium ion battery cathode material is NaₘNiₓFe_{y}Mn_{z}O₂, where 0.1≤x≤0.25, 0.5≤y≤0.8, 0.1≤z≤0.25, 0.8≤m≤1.1, 0.95≤x/z≤1.05, and x+y+z=1, m, x, y and z are molar percentages of corresponding elements, respectively, and each component in the chemical formula satisfies charge conservation and stoichiometry conservation. The preparation method includes the following steps: preparing a precursor including a nickel source, an iron source and a manganese source with required stoichiometry by a co-precipitation method; mixing the precursor of the nickel source, iron source and manganese source with a sodium source according to a certain proportion, adding a doping element for primary sintering to a obtain a doped sodium ion battery cathode material; and carrying out secondary sintering on the doped sodium ion battery cathode material and a coating to obtain a final sodium ion battery cathode material. The sodium ion battery cathode material provided by the present disclosure has the advantages of high capacity, low residual alkali and high stability.

## Description

### TECHNICAL FIELD

The present disclosure relates to the technical field of sodium ion batteries, and in particular to a sodium ion battery cathode material, a preparation method for the sodium ion battery cathode material, and application of the sodium ion battery cathode material.

### BACKGROUND

With the rapid development of new energy industry, the lithium resources for preparing lithium-ion batteries are far from meeting the explosive growth demand. Sodium ion battery has become a strong competitor to replace lithium-ion battery in large-scale energy storage systems due to its similar energy storage mechanism and abundant reserves.

Layered sodium ion battery is considered as the most potential sodium ion battery cathode material. For example, a sodium ion battery high-nickel layered oxide material and a preparation method therefor and application thereof are disclosed in CN113258060B. A chemical formula of the sodium ion battery high-nickel layered oxide material is NaₓNiₐFe_{b}Mn_{c}M_{d}O_{2±δ}, in which Ni, Fe and Mn are transition metal elements, and M is an element for doping and substituting transition metal sites. In the structure of the oxide material, ions at the transition metal sites and adjacent six oxygen ions form an octahedral structure, and the octahedral structure and an octahedral NaO₆ layer are alternately arranged to form an O3-type sodium ion battery high-nickel layered oxide material with a space group of R-3m. M specifically includes one or more of Li⁺, Mg^{2 +}, Ca²⁺, Cu²⁺, Zn²⁺, Al³⁺, B³⁺, Co³⁺, V³⁺, Y³⁺, Ti⁴⁺, Zr⁴⁺, Sn⁴⁺, Mo⁴⁺, Si⁴⁺, Ru⁴⁺, Nb⁵⁺, Sb⁵⁺, Mo⁵⁺, Mo⁶⁺, and W⁶⁺; x, a, b, c, d and 2+δ are the molar percentages of the corresponding elements, respectively. Each component in the chemical formula satisfies the charge conservation and stoichiometry conservation, and 0.67≤x≤1, 0.5≤a<1, 0.01≤b≤0.35, 0.01≤c≤0.35, 0≤d≤0.3 and 0≤δ≤0.1.

However, these nickel-containing layered transition metal oxides for the sodium ion battery cathode material have the problems of high cost, high residual alkali on the surface and poor cycle stability, and thus their large-scale application is limited.

### SUMMARY

In view of above contents, the present disclosure is intended to at least solve one of the technical problems in the prior art. To this end, a sodium ion battery cathode material and a preparation method therefor and application thereof are provided by the present disclosure. By regulating the composition and particle morphology of transition metal elements Fe and Mn, the high capacity of the cathode material is kept in a case of keeping low nickel, the free sodium ions on the surface are reduced, and the low-nickel sodium ion battery cathode material with high capacity, low residual alkali and high stability is obtained. Meanwhile, the preparation method is simple in process flow, and suitable for large-scale industrial production.

In a first aspect, a sodium ion battery cathode material is provided according to an embodiment of the present disclosure. A chemical formula of the sodium ion battery cathode material is NaₘNiₓFe_{y}Mn_{z}O₂, where 0.1≤x≤0.25, 0.5≤y≤0.8, 0.1≤z≤0.25, 0.8≤m≤1.1, 0.95≤x/z<1.05, x+y+z=1, and m, x, y and z are molar percentages of corresponding elements, respectively, and each component in the chemical formula satisfies charge conservation and stoichiometry conservation.

Preferably, the sodium ion battery cathode material includes a doping element A, a chemical formula of the sodium ion battery cathode material is NaₘNiₓFe_{y}Mn_{z}AₚO₂, in which 0.001≤p≤0.05, 0.1≤x≤0.25, 0.5≤y≤0.8, 0.1≤z≤0.25, 0.8≤m≤1.1, 0.95≤x/z<1.05, x+y+z=1, and m, x, y, z and p are molar percentages of corresponding elements, respectively, and each component in the chemical formula satisfies the charge conservation and the stoichiometry conservation. The doping element A is one or more of lithium, magnesium, calcium, copper, zinc, aluminum, boron, cobalt, vanadium, yttrium, titanium, zirconium, tin, molybdenum, silicon, ruthenium, niobium, antimony and tungsten.

In a second aspect, a preparation method for preparing the sodium ion battery cathode material provided in the first aspect is provided by the embodiment of the present disclosure. The preparation method includes the following steps: preparing a precursor comprising a nickel source, an iron source and a manganese source with required stoichiometry by a co-precipitation method; mixing the precursor of the nickel source, the iron source and the manganese source with a sodium source according to a certain proportion, adding a doping element for primary sintering to a obtain a doped sodium ion battery cathode material; and carrying out secondary sintering on the doped sodium ion battery cathode material and a coating to obtain a final sodium ion battery cathode material.

Preferably, the iron source is one or more of ferrous sulfate, hydrous ferrous sulfate, ferrous nitrate and ferrous chloride. The manganese source is one or more of manganese sulfate, manganese nitrate, manganese chloride and manganese acetate. The nickel source is one or more of nickel chloride, nickel oxide, nickel nitrate, nickel sulfate and nickel sulphamate.

Preferably, preparing a precursor comprising a nickel source, an iron source and a manganese source with required stoichiometry by a co-precipitation method includes the following steps: preparing the nickel source, the iron source and the manganese source into an aqueous solution according to a stoichiometric ratio; preparing an ammonia aqueous solution with a certain concentration and a sodium hydroxide solution with a certain concentration; under a certain rotating speed and temperature, adding the aqueous solution, the ammonia aqueous solution and the sodium hydroxide solution into a reaction kettle according to a certain flow rate, controlling a pH value of a reaction system to be 10-10.5, and carrying out co-precipitation reaction to obtain a reaction product; and carrying out washing, suction filtering and drying on the reaction product to obtain the precursor of the nickel source, the iron source and the manganese source.

Preferably, a molar ratio of the added nickel source to iron source to manganese source satisfies n (Ni): n (Fe): n (Mn) = x: y: z. The concentration of the ammonia aqueous solution is 25%, and the concentration of the sodium hydroxide solution is 15%. The rotating speed is 300-500 rpm, and the temperature is 40-80°C. The flow rate of the aqueous solution is 1.0 L/h, the flow rate of the ammonia aqueous solution is 0.8 L/h, and the flow rate of the sodium hydroxide solution is 2.0 L/h.

Preferably, a molar ratio of the precursor of the nickel source, the iron source and the manganese source to the sodium source is 1: (0.8-1.1). The sodium source is one or more of sodium carbonate, sodium bicarbonate, sodium sulfate, sodium chloride, sodium perchlorate, sodium nitrate, sodium phosphate, and sodium hydrogen phosphate.

Preferably, the doping element is one or more of lithium, magnesium, calcium, copper, zinc, aluminum, boron, cobalt, vanadium, yttrium, titanium, zirconium, tin, molybdenum, silicon, ruthenium, niobium, antimony, and tungsten. The primary sintering process is as follows: heating to 480°C at a heating rate of 3°C/min, and holding the temperature for 4 hours.

Preferably, the coating is one or more of calcium oxide, cobalt oxyhydroxide, aluminum oxide, sodium molybdate, lanthanum oxide, aluminum metaphosphate, titanium oxide, magnesium oxide, zirconium oxide, sodium titanate, cobalt oxide, aluminum fluoride, chromium oxide, zinc oxide, strontium oxide, copper oxide, and tungsten oxide. The secondary sintering process is as follows: heating to 850°C at a heating rate of 4°C/min, and holding the temperature for 10 hours.

In a third aspect, a sodium ion battery is provided according to an embodiment of the present disclosure, including the sodium ion battery cathode material provided in the first aspect.

According to a sodium ion battery cathode material and a preparation method therefor and application thereof provided by the embodiment of the present disclosure, a low-nickel layered oxide is adopted, and by regulating the composition and particle morphology of transition metal elements Fe and Mn, the high capacity of the cathode material is kept in a case of keeping low nickel, the free sodium ions on the surface are reduced, and the low-nickel sodium ion battery cathode material with high capacity, low residual alkali and high stability is obtained. Meanwhile, the preparation method is simple in process flow, and suitable for large-scale industrial production.

### BRIEF DESCRIPTION OF THE DRAWINGS

FIG. 1 is a flow diagram of a preparation method for a sodium ion battery cathode material according to embodiments of the present disclosure;
FIG. 2 is a flow diagram of Step S1 in a preparation method for a sodium ion battery cathode material according to embodiments of the present disclosure;
FIG. 3 is an SEM (Scanning Electron Microscope) graph of a sodium ion battery cathode material prepared according to Embodiment 1 of the present disclosure;
FIG. 4 is an XRD (X-Ray Diffraction) graph of a sodium ion battery cathode material prepared according to Embodiment 1 of the present disclosure.

### DETAILED DESCRIPTION OF THE EMBODIMENTS

The embodiments of the present disclosure are described in detail below. Examples of the embodiments are shown in the accompanying drawings, and the same or similar numbers throughout this specification represent the same or similar elements or elements having the same or similar functions. The embodiments described below in conjunction with the drawings are illustrative, and are intended to illustrate the present disclosure, and cannot be construed as the limitations of the present disclosure.

The following disclosure provides many different embodiments or examples for implementing different structures of the present disclosure. To simplify the present disclosure, components and arrangements of particular examples are described below. Certainly, the components and arrangements are only examples and are not intended to limit the present disclosure. In addition, reference numerals and/or letters may be repeated in different examples according to the present disclosure. Such a repetition is for simplicity and clarity, and does not in itself indicate the relationship between the various embodiments and/or arrangements discussed. Furthermore, the present disclosure provides examples of various specific processes and materials, but those of ordinary skill in the art can realize the applicability of other processes and/or the use of other materials.

An objective of the present disclosure is to provide a sodium ion battery cathode material and a preparation method therefor and application thereof, a low-nickel layered oxide is adopted, and by regulating the composition and particle morphology of transition metal elements Fe and Mn, the high capacity of the cathode material is kept in a case of keeping low nickel, the free sodium ions on the surface are reduced, and the low-nickel sodium ion battery cathode material with high capacity, low residual alkali and high stability is obtained. Meanwhile, the preparation method is simple in process flow, and suitable for large-scale industrial production.

A sodium ion battery cathode material is provided according to a first aspect embodiment of the present disclosure. A chemical formula of the sodium ion battery cathode material is NaₘNiₓFe_{y}Mn_{z}O₂, where 0.1≤x≤0.25, 0.5≤y≤0.8, 0.1≤z≤0.25, 0.8≤m≤1.1, 0.95≤x/z<1.05, x+y+z=1, and m, x, y and z are molar percentages of corresponding elements, respectively, and each component in the chemical formula satisfies charge conservation and stoichiometry conservation. In the structure of the sodium ion battery cathode material, ions at transition metal sites form octahedral structures with six adjacent oxygen ions, so as to form an O3-type low-nickel layered oxide material with a space group of R-3m to serve as the sodium ion battery cathode material.

Further, the sodium ion battery cathode material includes a doping element A, a chemical formula of the sodium ion battery cathode material is NaₘNiₓFe_{y}Mn_{z}AₚO₂, where 0.001≤p≤0.05, 0.1≤x≤0.25, 0.5≤y≤0.8, 0.1≤z≤0.25, 0.8≤m≤1.1, 0.95≤x/z≤1.05, x+y+z=1, and m, x, y, z and p are molar percentages of corresponding elements, respectively, and each component in the chemical formula satisfies the charge conservation and the stoichiometry conservation. The element A may be one or more of lithium (Li⁺), magnesium (Mg₂₊), calcium (Ca²⁺), copper (Cu²⁺), zinc (Zn²⁺), aluminum (Al³⁺), boron (B³⁺), cobalt (Co³⁺), vanadium (V³⁺), yttrium (Y³⁺), titanium (Ti⁴⁺), zirconium (Zr⁴⁺), tin (Sn⁴⁺), molybdenum (Mo⁴⁺, Mo⁵⁺, Mo⁶⁺), silicon (Si⁴⁺), ruthenium (Ru⁴⁺), niobium (Nb⁵⁺), antimony (Sb⁵) and tungsten (W⁶⁺).

A preparation method for a sodium ion battery cathode material is provided according to a second aspect embodiment of the present disclosure, including the following steps:
Step S1. A precursor including a nickel source, an iron source and a manganese source with required stoichiometry is prepared by a co-precipitation method.

Preferably, the iron source may be one or more of ferrous sulfate, hydrous ferrous sulfate, ferrous nitrate, and ferrous chloride. The manganese source may be one or more of manganese sulfate, manganese nitrate, manganese chloride, and manganese acetate. The nickel source may be one or more of nickel chloride, nickel oxide, nickel nitrate, nickel sulfate, and nickel sulphamate.

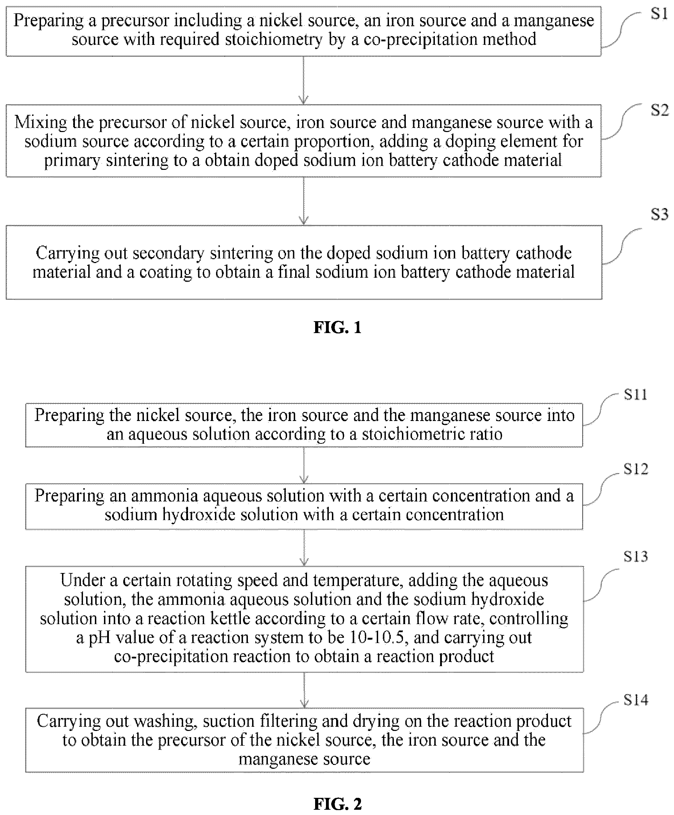

Specifically, in a first embodiment of the present disclosure, as shown in FIG. 2, Step S1 includes:
S11. The nickel source, the iron source and the manganese source are prepared into an aqueous solution according to a stoichiometric ratio.

A molar ratio of the added nickel source to iron source to manganese source satisfies n (Ni): n (Fe): n (Mn) = x: y: z.

S12. An ammonia aqueous solution with a certain concentration and a sodium hydroxide solution with a certain concentration are prepared.

The concentration of the ammonia aqueous solution is 25%, and the concentration of the sodium hydroxide solution is 15%.

S13. Under a certain rotating speed and temperature, the aqueous solution, the ammonia aqueous solution and the sodium hydroxide solution are added into a reaction kettle according to a certain flow rate, a pH value of a reaction system is controlled to be 10-10.5, and then a co-precipitation reaction is carried out to obtain a reaction product.

The rotating speed may be 300-500 rpm, and the temperature may be 40-80°C. The flow rate of the aqueous solution is 1.0 L/h, the flow rate of the ammonia aqueous solution is 0.8 L/h, and the flow rate of the sodium hydroxide solution is 2.0 L/h.

S14: The reaction product is subjected to washing, suction filtering and drying to obtain the precursor of the nickel source, iron source and manganese source.

Step S2. The precursor of the nickel source, the iron source and the manganese source is mixed with a sodium source according to a certain proportion, and then a doping element is added for primary sintering to a obtain doped sodium ion battery cathode material.

A molar ratio of the precursor of the nickel source, the iron source and the manganese source to the sodium source is 1: (0.8-1.1), the sodium source may be one or more of sodium carbonate, sodium bicarbonate, sodium sulfate, sodium chloride, sodium perchlorate, sodium nitrate, sodium phosphate, and sodium hydrogen phosphate. The doping element may be one or more of lithium, magnesium, calcium, copper, zinc, aluminum, boron, cobalt, vanadium, yttrium, titanium, zirconium, tin, molybdenum, silicon, ruthenium, niobium, antimony and tungsten. The primary sintering process is as follows: heating to 480°C at a heating rate of 3°C/min, and holding the temperature for 4 hours.

Step S3. The doped sodium ion battery cathode material and a coating are subjected to secondary sintering to obtain a final sodium ion battery cathode material.

The coating may be one or more of calcium oxide, cobalt oxyhydroxide, aluminum oxide, sodium molybdate, lanthanum oxide, aluminum metaphosphate, titanium oxide, magnesium oxide, zirconium oxide, sodium titanate, cobalt oxide, aluminum fluoride, chromium oxide, zinc oxide, strontium oxide, copper oxide, and tungsten oxide. The secondary sintering process is as follows: heating to 850°C at a heating rate of 4°C/min, and holding the temperature for 10 hours.

The sodium ion battery cathode material prepared by the preparation method for the sodium ion battery cathode material provided by the embodiment of the present disclosure is a low-nickel layered oxide material, where an iron element in the low-nickel layered oxide has electrochemical activity, and can reduce the capacity of the low-nickel layered oxide material. Meanwhile, the oxidation of bivalent nickel on the surface leads to the precipitation of bulk sodium, which makes the content of free sodium ions on the surface of the sodium ion battery cathode material lower and the surface more stable. Meanwhile, the preparation method is simple in process flow, and suitable for large-scale industrial production.

Embodiments are further listed below to illustrate the present disclosure in detail. It should also be understood that the following embodiments are only used to further illustrate the present disclosure, and cannot be understood as limiting the scope of protection of the present disclosure. Some non-essential improvements and adjustments made by those skilled in the art according to the above contents of the present disclosure belong to the scope of protection of the present disclosure. The specific process parameters and the like in the following examples are only one example in the appropriate range, that is, those skilled in the art can make choices within the appropriate range through the description herein, and are not limited to the specific values in the following examples.

### Embodiment 1

A preparation method for a sodium ion battery cathode material is provided by this embodiment, a chemical formula of the sodium ion battery cathode material prepared in this embodiment is NaNi_{0.25}Fe_{0.5}Mn_{0.25}O₂ (x=0.25, y=0.5, and z=0.25 at this time). The preparation method includes the following steps:
According to the chemical formula NaNi_{0.25}Fe_{0.5}Mn_{0.25}O₂, nickel sulfate, manganese sulfate and ferrous sulfate heptahydrate are prepared into an aqueous solution according to a molar ratio of nickel to iron to manganese of 0.25: 0.5: 1/3. An ammonia aqueous solution with a concentration of 25% and a sodium hydroxide solution with a concentration of 15% are prepared at a rotating of 350 rpm and a temperature of 50°C. The aqueous solution, the ammonia aqueous solution and the sodium hydroxide solution are added into a reaction kettle at flow rates of 1.0 L/h, 0.8 L/h and 2.0 L/h, respectively, a pH value of a reaction system is controlled to be 10-10.5, and then a co-precipitation reaction is carried out to obtain a product. Then the product is subjected to washing, suction filtering and drying to obtain a precursor of a nickel source, an iron source and a manganese source. After the precursor of the nickel source, the iron source and the manganese source is uniformly mixed with sodium carbonate according to a molar ratio of 1: 1.1, the mixture is heated to 480°C at a heating rate of 3°C/min and kept at 480°C for 4 h, and then is heated to 850°C at a heating rate of 4°C/min and kept at 850°C for 10 h, thus obtaining the sodium battery ion cathode material NaNi_{0.25}Fe_{0.5}Mn_{0.25}O₂.

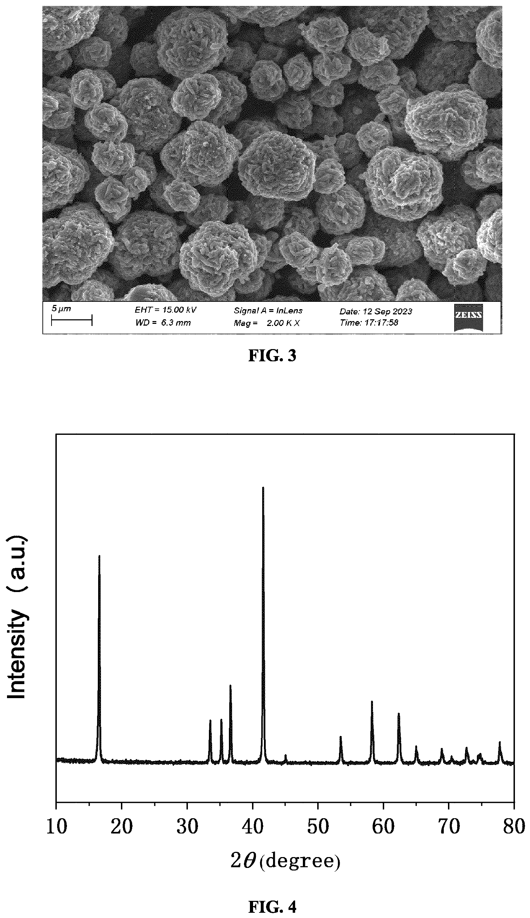

An SEM graph of the sodium ion battery cathode material prepared according to Embodiment 1 is shown in FIG. 3.

An XRD graph of the sodium ion battery cathode material prepared according to Embodiment 1 is shown in FIG. 4.

### Embodiment 2

A preparation process of a sodium ion battery cathode material in Embodiment 2 is the same as that in Embodiment 1, the only differences are that x=0.23, y=0.54, z=0.23, and thus a chemical formula of the sodium ion battery cathode material is NaNi_{0.23}Fe_{0.54}Mn_{0.23}O₂.

### Embodiment 3

A preparation process of a sodium ion battery cathode material in Embodiment 3 is the same as that in Embodiment 1, the only differences are that x=0.2, y=0.6, z=0.2, and thus a chemical formula of the sodium ion battery cathode material is NaNi_{0.2}Fe_{0.6}Mn_{0.2}O₂.

### Embodiment 4

A preparation process of a sodium ion battery cathode material in Embodiment 4 is the same as that in Embodiment 1, the only differences are that x=0.18, y=0.64, z=0.18, and thus a chemical formula of the sodium ion battery cathode material is NaNi_{0.18}Fe_{0.64}Mn_{0.18}O₂.

### Embodiment 5

A preparation process of a sodium ion battery cathode material in Embodiment 5 is the same as that in Embodiment 1, the only differences are that x=0.15, y=0.7, z=0.15, and thus a chemical formula of the sodium ion battery cathode material is NaNi_{0.15}Fe_{0.7}Mn_{0.15}O₂.

### Embodiment 6

A preparation process of the sodium ion battery cathode material in Embodiment 6 is the same as that in Embodiment 1, the only differences are that x=0.1, y=0.8, z=0.1, and thus a chemical formula of the sodium ion battery cathode material is NaNi_{0.1}Fe_{0.8}Mn_{0.1}O₂.

### Embodiment 7

A preparation method for a sodium ion battery cathode material is provided by this embodiment, a chemical formula of the sodium ion battery cathode material prepared in this embodiment is NaNi_{0.2}Fe_{0.6}Mn_{0.2}Ca_{0.03}O₂ (x=0.2, y=0.6, z=0.2, and p=0.03 at this time). The preparation method includes the following steps:
According to the chemical formula NaNi_{0.2}Fe_{0.6}Mn_{0.2}Ca_{0.003}O₂, nickel sulfate, manganese sulfate and ferrous sulfate heptahydrate are prepared into an aqueous solution according to a molar ratio of nickel to iron to manganese of 0.25: 0.5: 1/3. An ammonia aqueous solution with a concentration of 25% and a sodium hydroxide solution with a concentration of 15% are prepared at a rotating speed of 350 rpm and a temperature of 50°C. The aqueous solution, the ammonia aqueous solution and the sodium hydroxide solution are added into a reaction kettle at flow rates of 1.0 L/h, 0.8 L/h and 2.0 L/h, respectively, a pH value of a reaction system is controlled to be 10-10.5, and then a co-precipitation reaction is carried out to obtain a product. Then the product is subjected to washing, suction filtering and drying to obtain a precursor of a nickel source, an iron source and a manganese source. After the precursor of the nickel source, the iron source and the manganese source is uniformly mixed with sodium carbonate according to a molar ratio of 1: 1.1, a calcium-doped compound is added, then the mixture is heated to 480°C at a heating rate of 3°C/min and kept at 480°C for 4 h, afterwards, a cobalt oxyhydroxide coating is added, and then the mixture is heated to 850C° at a heating rate of 4°C/min and kept at 850C° for 10 h, thus obtaining the sodium battery ion cathode material with the chemical formula of NaNi_{0.2}Fe_{0.6}Mn_{0.2}Ca_{0.003}O₂.

### Embodiment 8

A preparation process of a sodium ion battery cathode material in Embodiment 8 is the same as that in Embodiment 7, the only difference is that p=0.006, and thus a chemical formula of the sodium ion battery cathode material is NaNi_{0.2}Fe_{0.6}Mn_{0.2}Ca_{0.006}O₂.

### Embodiment 9

A preparation process of a sodium ion battery cathode material in Embodiment 9 is the same as that in Embodiment 7, the only difference is that the doping element is zinc, and thus a chemical formula of the sodium ion battery cathode material is NaNi_{0.2}Fe_{0.6}Mn_{0.2}Zn_{0.003}O₂.

### Embodiment 10

A preparation process of the sodium ion battery cathode material in Embodiment 10 is the same as that in Embodiment 7, the only difference is that the doping element is copper, and thus a chemical formula of the sodium ion battery cathode material is NaNi_{0.2}Fe_{0.6}Mn_{0.2}Cu_{0.003}O₂.

### Comparative example 1

A preparation method for a sodium ion battery cathode material is provided by this embodiment, a chemical formula of the sodium ion battery cathode material prepared in this embodiment is NaNi_{1/3}Fe_{1/3}Mn_{1/3}O₂ (x= 1/3, y= 1/3, and z= 1/3 at this time). The preparation method includes the following steps:
According to the chemical formula NaNi_{1/3}Fe_{1/3}Mn_{1/3}O₂, nickel oxide, iron oxide and manganese oxide are mixed according to a molar ratio of nickel to iron to manganese of 1/3: 1/3: 1/3, sodium carbonate measured when m=1 is added, a doping compound is added, and then the mixture is heated to 480°C at the heating rate of 3 °C /min and kept at 480°C for 5 hours, and is then heated to 870° at the heating rate of 4 °C /min and kept at 870°C for 12 hours, so as to obtain a sodium ion battery cathode material with the chemical formula of NaNi_{1/3}Fe_{1/3}Mn_{1/3}O₂.

### Comparative example 2

A preparation method for a sodium ion battery cathode material is provided by this embodiment, a chemical formula of the sodium ion battery cathode material prepared in this embodiment is NaNi_{1/3}Fe_{1/3}Mn_{1/3}O₂ (x= 1/3, y= 1/3, and z= 1/3 at this time). The preparation method includes the following steps:
According to the chemical formula NaNi_{1/3}Fe_{1/3}Mn_{1/3}O₂, nickel sulfate, manganese sulfate and ferrous sulfate heptahydrate are prepared into an aqueous solution according to a molar ratio of nickel to iron to manganese of 1/3: 1/3: 1/3. An ammonia aqueous solution with a concentration of 25% and a sodium hydroxide solution with a concentration of 15% are prepared at a rotating of 350 rpm and a temperature of 50°C. The aqueous solution, the ammonia aqueous solution and the sodium hydroxide solution are added into a reaction kettle at flow rates of 1.0 L/h, 0.8 L/h and 2.0 L/h, respectively, a pH value of a reaction system is controlled to be 10-10.5, and then a co-precipitation reaction is carried out to obtain a product. Then the product is subjected to washing, suction filtering and drying to obtain a precursor of a nickel source, an iron source and a manganese source. After the precursor of the nickel source, the iron source and the manganese source is uniformly mixed with sodium carbonate according to a molar ratio of 1: 1.1, the mixture is heated to 480°C at a heating rate of 3°C/min and kept at 480°C for 4 h, and then is heated to 850°C at a heating rate of 4°C/min and kept at 850°C for 10 h, thus obtaining the sodium battery ion cathode material NaNi_{1/3}Fe_{1/3}Mn_{1/3}O₂.

The content of free sodium ions in the sodium ion battery cathode materials prepared in Embodiments 1-10 and Comparative Examples 1-2 are tested. At the same time, in order to verify the quality of the finished product of the sodium ion battery cathode materials prepared by the preparation method for the sodium ion battery cathode materials provided by the embodiments of the present disclosure, the sodium ion battery cathode materials prepared in Embodiments 1-10 and Comparative Examples 1-2 are dispersed with conductive agent-carbon black and binder-polyvinylidene fluoride according to a mass ratio of 90: 5: 5, then are coated on an aluminum film after being evenly dispersed by ball milling, and then are dried in vacuum to obtain positive electrode sheets. The electrolyte is LiPF6 with a concentration of 1mol/L, in which a solvent volume ratio is EC: DMC: EMC=1: 1: 1, a separator is Celgard polypropylene film, and a metal lithium sheet is a negative electrode, and thus the electrolyte, the separator and the metal lithium sheet are commonly assembled into a button type half cell. A test voltage ranges from 2.5 V to 4.5 V, and is charged to 4.5 V by a constant-current and constant-voltage charging mode, and is discharged to 2.5 V by a constant-current discharge mode. A charge-discharge current is 0.1C for two turns. Test results of specific test items and test results are as shown in the following Table 1:

**Table Test items and test results of Embodiments 1 to 10 and Comparative examples 1-2**

| Number | Sample | The content of free sodium ions (%) | Initial discharge specific capacity (mAh/g) |
|---|---|---|---|
| Embodiment 1 | NaNi_{0.25}Fe_{0.5}Mn_{0.25}O₂ | 1.23 | 140 |
| Embodiment 2 | NaNi_{0.23}Fe_{0.54}Mn_{0.23}O₂ | 1.19 | 141 |
| Embodiment 3 | NaNi_{0.2}Fe_{0.6}Mn_{0.2}O₂ | 1.03 | 142 |
| Embodiment 4 | NaNi_{0.18}Fe_{0.64}Mn_{0.18}O₂ | 0.97 | 135 |
| Embodiment 5 | NaNi_{0.15}Fe_{0.7}Mn_{0.15}O₂ | 0.81 | 131 |
| Embodiment 6 | NaNi_{0.10}Fe_{0.8}Mn_{0.10}O₂ | 0.68 | 110 |
| Embodiment 7 | NaNi_{0.2}Fe_{0.6}Mn_{0.2}Ca_{0.003} O₂ | 0.98 | 142 |
| Embodiment 8 | NaNi_{0.2}Fe_{0.6}Mn_{0.2}Ca_{0.006} O₂ | 0.95 | 141 |
| Embodiment 9 | NaNi_{0.2}Fe_{0.6}Mn_{0.2}Zn_{0.003} O₂ | 0.94 | 142 |
| Embodiment 10 | NaNi_{0.2}Fe_{0.6}Mn_{0.2}Cu_{0.003} O₂ | 0.92 | 143 |
| Comparative | NaNi_{1/3}Fe_{1/3}Mn_{1/3}O₂ | 2.30 | 130 |
| example 1 | | | |
| Comparative example 2 | NaNi_{1/3}Fe_{1/3}Mn_{1/3}O₂ | 2.10 | 136 |

According to the comparison between the above embodiments and comparative examples, and by comprising the test results obtained by testing, it can be seen that the preparation method for the sodium ion battery cathode material provided by the embodiment of the present disclosure can effectively improve the discharge specific capacity of the sodium ion battery cathode material, reduce the content of free sodium ions on the surface of the sodium ion battery cathode material, and improve the stability of the material.

In conclusion, according to the preparation method for the sodium ion battery cathode material provided by the embodiments of the present disclosure, a low-nickel layered oxide is adopted. By regulating the composition and particle morphology of transition metal elements Fe and Mn, the high capacity of the cathode material is kept in a case of keeping low nickel, the free sodium ions on the surface are reduced, and the low-nickel sodium ion battery cathode material with high capacity, low residual alkali and high stability is obtained. Meanwhile, the preparation method is simple in process flow, and suitable for large-scale industrial production.

In the description of this specification, descriptions referring to the terms "one embodiment", "some embodiments", "examples", "specific examples" or "some examples" mean that specific features, structures, materials or characteristics described in connection with this embodiment or example are included in at least one embodiment or example of the present disclosure. In this specification, the schematic representations of the above terms are not necessarily aimed at the same embodiment or example. Moreover, specific features, structures, materials or characteristics described may be combined in any one or more embodiments or examples in a suitable manner. In addition, those skilled in the art can bind and combine different embodiments or examples and features of different embodiments or examples described in this specification without contradicting each other.

Although the embodiments of the present disclosure have been shown and described, those skilled in the art can understand that many changes, modifications, substitutions and variations can be made to these embodiments without departing from the principles and purposes of the present disclosure, and the scope of the present disclosure is defined by the claims and their equivalents.

## Claims

1. A sodium ion battery cathode material, wherein a chemical formula of the sodium ion battery cathode material is NaₘNiₓFe_{y}Mn_{z}O₂, wherein 0.1≤x≤0.25, 0.5≤y≤0.8, 0.1≤z≤0.25, 0.8≤m≤1.1, 0.95≤x/z<1.05, x+y+z=1, and m, x, y and z are molar percentages of corresponding elements, respectively, and each component in the chemical formula satisfies charge conservation and stoichiometry conservation.

2. The sodium ion battery cathode material according to claim 1, wherein the sodium ion battery cathode material comprises a doping element A, a chemical formula of the sodium ion battery cathode material is NaₘNiₓFe_{y}Mn_{z}AₚO₂, wherein 0.001≤p≤0.05, 0.1≤x≤0.25, 0.5≤y≤0.8, 0.1≤z≤0.25, 0.8≤m≤1.1, 0.95≤x/z<1.05, x+y+z=1, and m, x, y, z and p are molar percentages of corresponding elements, respectively, and each component in the chemical formula satisfies the charge conservation and the stoichiometry conservation; and the doping element A is one or more of lithium, magnesium, calcium, copper, zinc, aluminum, boron, cobalt, vanadium, yttrium, titanium, zirconium, tin, molybdenum, silicon, ruthenium, niobium, antimony and tungsten.

3. A preparation method for the sodium ion battery cathode material according to claim 1, comprising the following steps:
Step S1: preparing a precursor comprising a nickel source, an iron source and a manganese source with required stoichiometry by a co-precipitation method;
Step S2: mixing the precursor of the nickel source, the iron source and the manganese source with a sodium source according to a certain proportion, adding a doping element for primary sintering to a obtain a doped sodium ion battery cathode material; and
Step S3: carrying out secondary sintering on the doped sodium ion battery cathode material and a coating to obtain a final sodium ion battery cathode material.

4. The preparation method for the sodium ion battery cathode material according to claim 3, wherein in Step S1, the iron source is one or more of ferrous sulfate, hydrous ferrous sulfate, ferrous nitrate and ferrous chloride; the manganese source is one or more of manganese sulfate, manganese nitrate, manganese chloride and manganese acetate; and the nickel source is one or more of nickel chloride, nickel oxide, nickel nitrate, nickel sulfate and nickel sulphamate.

5. The preparation method for the sodium ion battery cathode material according to claim 3, wherein Step S1 comprises the following steps:
S11: preparing the nickel source, the iron source and the manganese source into an aqueous solution according to a stoichiometric ratio;
S12: preparing an ammonia aqueous solution with a certain concentration and a sodium hydroxide solution with a certain concentration;
S13: under a certain rotating speed and temperature, adding the aqueous solution, the ammonia aqueous solution and the sodium hydroxide solution into a reaction kettle according to a certain flow rate, controlling a pH value of a reaction system to be 10-10.5, and carrying out co-precipitation reaction to obtain a reaction product; and
S14: carrying out washing, suction filtering and drying on the reaction product to obtain the precursor of the nickel source, the iron source and the manganese source.

6. The preparation method for the sodium ion battery cathode material according to claim 5, wherein a molar ratio of the added nickel source to iron source to manganese source satisfies n (Ni): n (Fe): n (Mn) = x: y: z; the concentration of the ammonia aqueous solution is 25%, and the concentration of the sodium hydroxide solution is 15%; the rotating speed is 300-500 rpm and the temperature is 40-80°C; the flow rate of the aqueous solution is 1.0 L/h, the flow rate of the ammonia aqueous solution is 0.8 L/h, and the flow rate of the sodium hydroxide solution is 2.0 L/h.

7. The preparation method for the sodium ion battery cathode material according to claim 3, wherein in Step S2, a molar ratio of the precursor of the nickel source, the iron source and the manganese source to the sodium source is 1: (0.8-1.1), the sodium source is one or more of sodium carbonate, sodium bicarbonate, sodium sulfate, sodium chloride, sodium perchlorate, sodium nitrate, sodium phosphate, and sodium hydrogen phosphate.

8. The preparation method for the sodium ion battery cathode material according to claim 3, wherein in Step S2, the doping element is one or more of lithium, magnesium, calcium, copper, zinc, aluminum, boron, cobalt, vanadium, yttrium, titanium, zirconium, tin, molybdenum, silicon, ruthenium, niobium, antimony and tungsten, the primary sintering process is as follows: heating to 480°C at a heating rate of 3°C/min, and holding the temperature for 4 hours.

9. The preparation method for the sodium ion battery cathode material according to claim 3, wherein in Step S3, the coating is one or more of calcium oxide, cobalt oxyhydroxide, aluminum oxide, sodium molybdate, lanthanum oxide, aluminum metaphosphate, titanium oxide, magnesium oxide, zirconium oxide, sodium titanate, cobalt oxide, aluminum fluoride, chromium oxide, zinc oxide, strontium oxide, copper oxide, and tungsten oxide; and the secondary sintering process is as follows: heating to 850°C at a heating rate of 4°C/min, and holding the temperature for 10 hours.

10. A sodium ion battery, wherein the sodium ion battery includes the sodium ion battery cathode material according to any one of claims 1 to 2.
